# EUROPÄISCHE PATENTSCHRIFT

(11) **EP 1 471 335 B1**
(45) Veröffentlichungstag und Bekanntmachung des Hinweises auf die Patenterteilung: **29.11.2006**
(21) Anmeldenummer: 04006793.6
(22) Anmeldetag: 22.03.2004
(51) Int. Cl.: G01D 11/24, G12B 17/02, G01L 19/14

(54) **Sensor mit Hinter-Gewinde zur Befestigung an einem Behältnis sowie Lot-Druck-Kontakt zur Abschirmung**
Sensor with thread behind transducer for a fastening to a container and solder-pressure-contact for shielding
Capteur avec filetage en arrière pour la fixation sur un récipient ainsi qu'un contact de soudure sous pression pour le blindage

(30) Priorität: 24.04.2003 DE 10318678
(43) Veröffentlichungstag der Anmeldung: 27.10.2004
(73) Patentinhaber: VEGA Grieshaber KG, 77709 Wolfach (DE)
(72) Erfinder: Kopp, Thomas, 77709 Wolfach (DE)
(74) Vertreter: Patentanwälte Westphal, Mussgnug & Partner

(56) Entgegenhaltungen:
- EP-A- 0 317 163
- EP-A- 0 352 240
- EP-A- 0 780 674
- EP-A- 0 984 258
- EP-A- 1 070 948
- EP-A- 1 098 183
- WO-A-03/036252

## Beschreibung

Die Erfindung bezieht sich auf einen Sensor, insbesondere Druck-Sensor zur Befestigung an einem Behältnis mit den oberbegrifflichen Merkmalen des Patentanspruchs 1 und ein Verfahren zum Montieren eines solchen Sensors.

Ein solcher Sensor ist z. B. in EP 1 070 948 A1 beschrieben.

Allgemein bekannt ist die Befestigung eines Sensors an einer Wandung von einem Behältnis, um Parameter bezüglich des Behältnisinhalts oder Behältnisinnenraums zu bestimmen. Beispielsweise werden in der Papierindustrie insbesondere Druckmesseinrichtungen als Druck-Sensoren zum Bestimmen des Drucks im Innenraum eines Behältnisses verwendet.

Bisher bekannte Sensoren in Ausgestaltung als Druckmesseinrichtungen weisen ein Gehäuse mit einem Gewindeanschluss auf, über welchen das Gehäuse in eine Behältnis-Durchgangsöffnung von der Außenseite zur Innenseite des Behältnisses eingeschraubt wird. Bekannt sind dabei Druck-Sensoren als Polysilizium-Druck-Sensoren, welche in Verbindung mit einer Druckmittlerflüssigkeit eingesetzt werden, oder Druck-Sensoren, welche mit einem keramisch kapazitiven Druck-Sensorelement aufgebaut sind.

Die Systeme mit Polysilizium-Druck-Sensoren besitzen eine geringere Überlastfestigkeit gegen Druckstöße, da das Sensorelement nicht ausreichend abgestützt werden kann. Außerdem bestehen zunehmend größere Bedenken gegen den Einsatz von solchen Druck-Sensoren in Verbindung mit einer Druckmittlerausführung mit Blick auf das Medium im Behältnis, da die Anforderungen gegen eine mögliche Verunreinigung des Mediums durch die Messeinrichtung bzw. deren Druckmittlerflüssigkeit ständig zunehmen.

Systeme mit keramisch kapazitiven Druck-Sensorelementen sind derart aufgebaut, dass das Druck-Sensorelement über eine Befestigungseinrichtung von der Außenseite des Behältnisses zu der Innenseite des Behältnisses, d. h. zum Prozessanschluss hin eingebaut und damit gegen die Druckwirkung durch das zu überwachende Medium im Behältnis abgestützt wird. Ein Nachteil solcher Ausführungsformen besteht darin, dass durch die Behältnisdurchgangsöffnung und durch die darin eingesetzte stirnseitige Öffnung des Sensorgehäuses nur Druck-Sensorelemente mit einem entsprechend deutlich kleineren Durchmesser passen, wodurch sich eine Reduktion der Messgenauigkeit ergibt. Die Reduktion der Messgenauigkeit entsteht dadurch, dass sich das Verhältnis von Grundkapazität zu Messkapazität ungünstiger verhält als bei größerem Durchmesser.

Die Aufgabe der Erfindung besteht darin, einen Druck-Sensor mit einem Aufbau vorzuschlagen, welcher einen im Verhältnis zum vorderseitigen Außendurchmesser des Sensorgehäuses möglichst großen Durchmesser des eigentlichen Sensorelements als Sensoreinrichtung ermöglicht. Ferner soll vorzugsweise mit Blick auf die Anordnung einzelner Komponenten des Sensors innerhalb des Gehäuses eine verbesserte Anordnung vorgeschlagen werden, welche auch einen allgemein geringer dimensionierten Aufbau des Gehäuses ermöglicht. Vorteilhafterweise sollen Verfahrensweisen zum Fertigen derartiger Sensoren vorgeschlagen werden.

Diese Aufgabe wird durch einen Druck-Sensor mit den Merkmalen des Patentanspruchs 1 gelöst. Ein Verfahren zur Fertigung derartiger Sensoren ist Gegenstand des Patentanspruchs 5.

Erfindungsgemäß besteht ein Druck-Sensor aus einem Gehäuse mit einer Längsachse, einer vorderseitigen bzw. stirnseitigen und im eingebauten Zustand in eine Behältnis-Durchgangsöffnung hineinragenden Sensoreinrichtung und einer Sensoreinrichtungs-Befestigung zum Befestigen der Sensoreinrichtung am bzw. im Gehäuse. Um einen raumsparenden Aufbau zu ermöglichen, umgreift die als separates Teil ausgebildete Sensoreinrichtungs-Befestigungseinrichtung die Sensoreinrichtung von der Vorderseite aus zumindest in Abschnitten von dem vorderseitigen Randbereich der Sensoreinrichtung, wodurch diese eine vorderseitige Abstützung erfährt. Die Sensoreinrichtungs-Befestigungseinrichtung geht ohne Vergrößerung des Außenumfangs durch eine entsprechende Befestigung in das Gehäuse über. Eine geeignete Befestigung ist dabei eine Fügung, insbesondere eine thermische Fügung.

Im rückseitigen Bereich der Sensoreinrichtung ist an der Umfangswandung des Gehäuses ein Außengewinde zur Befestigung des Gehäuses in einem Innengewinde einer Behältnis-Durchgangsöffnung ausgebildet. Erfindungsgemäß ist dabei der Außenumfang der Sensoreinrichtungs-Befestigungseinrichtung kleiner oder gleich dem Kerndurchmesser des Gewindes, so dass eine nahezu vollständige Ausnutzung des Durchmessers der Behältnis-Druchgangsöffnung mit Blick auf den Außendurchmesser der Sensoreinrichtung ermöglicht wird. Lediglich die seitlich der Sensoreinrichtung geführten Wandungen der Sensoreinrichtungs-Befestigungseinrichtung und vorderseitig umgreifende Halterungselemente beschränken die effektiv nutzbare Fläche der Sensoreinrichtung.

Verfahrensgemäß wird die Sensoreinrichtung im Gegensatz zu den bekannten Einrichtungen von der Vorderseite aus am Gehäuse bzw. den darin befindlichen weiteren Komponenten angesetzt und angeschlossen, wobei zur Halterung der Sensoreinrichtung von der Vorderseite aus die Sensoreinrichtungs-Befestigungseinrichtung übergestülpt und am Gehäuse befestigt wird. Die Befestigung erfolgt dabei als Fügung, wobei möglichst wenig thermische Energie und möglichst geringe elektromagnetische Felder, vorteilhafterweise gar keine elektromagnetischen Felder einwirken sollen, um die zusammenzufügenden Metallteile der Sensoreinrichtungs-Befestigungseinrichtung und des Gehäuses zusammenzuschmelzen. Dadurch wird eine Zerstörung des Druck-Sensorelements aus einem keramischen Material sowie direkt angrenzender Dichtungen aus einem Elastomer vermieden.

Gemäß einer besonders bevorzugten und vorteilhaften Dimensionierung ist es durch eine derartige Anordnung bzw. Verfahrensweise möglich, einen Sensor zu fertigen, bei dem der Außendurchmesser der Sensoreinrichtung im Verhältnis zum Kerndurchmesser eines Außengewindes einer Sensorgehäuse-Befestigungseinrichtung nur unwesentlich geringer ist. Dabei ist das Verhältnis von dem Außendurchmesser von vorzugsweise Standard-Druck-Sensorelementen als Sensoreinrichtung zu Standard-Gewinde-Kerndurchmessern mit möglichst geringem Abstand und mit einer Sensoreinrichtungs-Befestigungseinrichtung mit halber Wandstärke der Durchmesser-Differenz erzielbar. Beispielsweise ist als typischer Außendurchmesser eines Druck-Sensorelements 28 mm bekannt, wobei ein solches Sensorelement mit der beschriebenen Anordnung an einem Sensorgehäuse mit einem Kerndurchmesser von 30,29 mm als typischem Bohrungskerndurchmesser für eine Behältnis-Durchgangsöffnung bzw. eine entsprechende Gehäuse-Befestigungseinrichtung in Form eines Außengewindes einsetzbar ist. Bei diesem Beispiel ergibt sich ein Verhältnis des Außendurchmessers der Sensoreinrichtung bzw. des Sensorelements relativ zum Kerndurchmesser eines Gewindes zum Befestigen des Sensors in einer Behältnis-Durchgangsöffnung von 90% oder mehr, insbesondere 92,4 %.

Zur Reduzierung der Anzahl von Komponenten und zur Redzierung der Größe von Komponenten und letztendlich der Größe des gesamten Sensors wird außerdem mit eigenständiger erfinderischer Ausgestaltung vorgeschlagen, das Material eines Modulgehäuses, z. B. eines Elektronikgehäuses mit einer lötbaren Beschichtung oder Oberfläche so auszugestalten, dass ein Zusammendrücken, insbesondere ein Zusammenpressen mit einem Befestigungselement oder einem anderen Element eine teilweise Auflösung und Verdrängung der lötbaren Beschichtung bewirkt und dadurch nach deren Verfestigung ein elektrischer Kontakt zum Schutz der Elektronik gegen elektromagnetische Einflüsse und/oder zur Sicherstellung des Potentialausgleiches ausgebildet wird. Dies vermeidet die Bereitstellung separater Kontakte, Anschlusselemente und Verbindungselemente.

Vorteilhafte Ausgestaltungen sind Gegenstand von abhängigen Ansprüchen.

Ein Ausführungsbeispiel wird nachfolgend anhand der Zeichnung näher erläutert. Es zeigt die einzige:

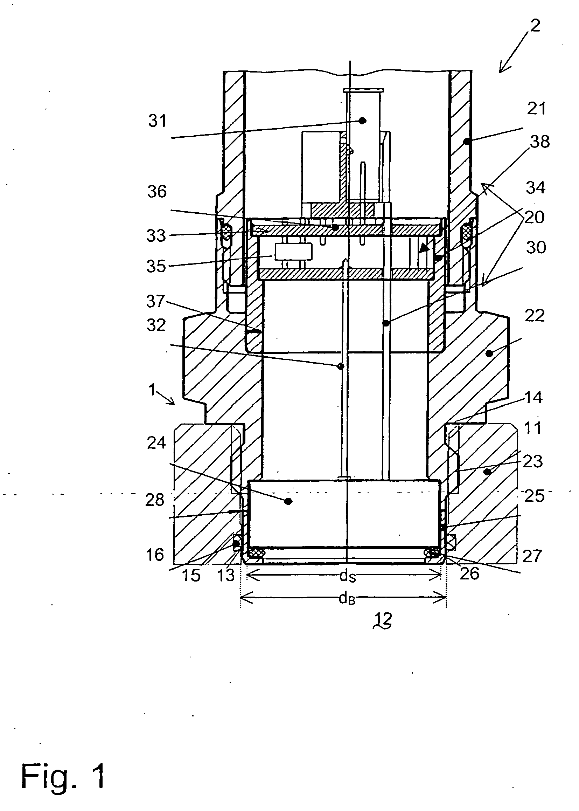

- Fig. 1: einen zumindest teilweisen Querschnitt durch einen Sensor, der in eine Behältnis-Durchgangsöffnung eines Behältnisses eingeschraubt ist.

Fig. 1 zeigt einen Ausschnitt eines Behältnisses 1, an welchem ein Sensor 2 insbesondere wieder lösbar befestigt ist. Das Behältnis 1 weist eine Wandung 11 auf, wobei der dargestellte Abschnitt beispielsweise auch ein Flansch oder eine sonstige Einschraubbefestigung als ein Element eines eigentlichen Behältnisses 1 ausgebildet sein kann.

Durch die Wandung 11 führt von der Behältnis-Innenseite 12 zur Außenseite eine Behältnis-Durchgangsöffnung 13. Zur Außenseite des Behältnisses 1 hin weist die Behältnis-Durchgangsöffnung 13 ein Behältnis-Innengewinde 14 auf, welches zum Einschrauben des Sensors 2 dient. Zur Abdichtung des eingesetzten Sensors 2 weist die Behältnis-Durchgangsöffnung 13 außerdem innenseitig eine umlaufende Behältnis-Nut 15 auf, in welcher eine elastische Dichtung, z. B. ein O-Ring 16 so eingesetzt ist, dass von der Behältnis-Innenseite 12 aus keinerlei Medium durch den Zwischenraum zwischen Behältnis-Durchgangsöffnung 13 und dem darin eingesetzten Sensor 2 zur Außenseite hin tritt.

Der Sensor 2 besteht aus einem Gehäuse 20, welches beim dargestellten Ausführungsbeispiel aus einer Vielzahl von Einzelkomponenten zusammengesetzt ist. Das beispielhafte Gehäuse 20 weist ein rückseitiges Gehäuseteil 21 und ein vorderseitiges Gehäuseteil 22 auf, wobei vorderseitig die Seite bzw. Richtung von Bauelementen in Richtung der Behältnisinnenseite 12 und rückseitig die entgegengesetzte Richtung in dem eingebauten Zustand darstellt. Die Richtunsangaben dienen dabei lediglich zur anschaulicheren Darstellung der Ausrichtung einzelner Komponenten zueinander. Im seitlichen Umfangsbereich des vorderen Abschnitts des vorderseitigen Gehäuseteils 22, 20 ist eine Gehäuse-Befestigungseinrichtung 23 in Form eines Außengewindes 23 ausgebildet. Mit Hilfe dieses Außengewindes 23 wird der Sensor 2 in das Innengewinde 14 der Behältnis-Durchgangsöffnung 13 eingeschraubt, um den Sensor 2 am Behältnis 1 zu befestigen.

Die eigentliche Sensoreinrichtung 24, insbesondere ein keramisches Druck-Sensorelement 24, ist am stirn- bzw. vorderseitigen Ende des vorderen Gehäuseteils 22, 20 angesetzt, insbesondere in einer Aufnahmeaussparung eingesetzt. Zur Befestigung der Sensoreinrichtung 24 dient eine Sensoreinrichtungs-Befestigungseinrichtung 25, welche im Wesentlichen ringförmig ausgebildet ist und die Sensoreinrichtung 24 seitlich von der Stirnseite des vorderseitigen Gehäuseteils 22, 20 ausgehend bis über die vordere Seite der Sensoreinrichtung 24 hinausreichend umgreift. Die Stärke der Sensoreinrichtungs-Befestigungseinrichtung 25 ist dabei so dünn wie möglich gehalten, um der Sensoreinrichtung 24 einerseits einen sicheren Halt an dem Gehäuse 20, 22 zu bieten und andererseits zu ermöglichen, dass der Durchmesser d_{S} der Sensoreinrichtung 24 möglichst nahezu so groß wie der Innendurchmesser d_{B} der Behältnis-Durchgangsöffnung 13 ausgebildet ist. Dies ermöglicht den Einsatz einer Sensoreinrichtung 24 mit einem optimal großen Durchmesser d_{S}, was letztendlich der üblichen Reduktion der Messgenauigkeit entgegenwirkt und die Messkapazität erhöht.

Um die Sensoreinrichtung 24 an dem Gehäuse 20, 22 und in der Behältnis-Durchgangsöffnung 13 zu halten, weist die Sensoreinrichtungs-Befestigungseinrichtung 25 einen oder mehrere nach innen in die Behältnis-Durchgangsöffnung 13 hineinragenden bzw. nach innen gerichtete Vorsprünge 26 auf. Bei der dargestellten Ausführungsform ist dieser nach innen gerichtete Vorsprung 26 als ein umgebogener und umlaufender Kragen 26 der ansonsten zylinder- bzw. ringförmigen Sensoreinrichtungs-Befestigungseinrichtung 25 ausgebildet. Um einerseits eine Abdichtung der Behältnis-Innenseite 12 gegenüber dem Innenraum des Gehäuses 20, 22 zu ermöglichen und andererseits die vorderseitige Oberfläche der Sensoreinrichtung 24 vor mechanischer Beschädigung zu schützen, sind eine oder mehrere Dichtungen 27, vorzugsweise ein umlaufender Dichtungsring 27 zwischen dem nach innen gerichteten Vorsprung 26 und der Vorderseite der Sensoreinrichtung 24 eingesetzt.

Zur Befestigung der Sensoreinrichtungs-Befestigungseinrichtung 25 an dem stirnseitigen Abschnitt des vorderseitigen Gehäuseteils 22, 20 ist eine Fügeverbindung 28 ausgebildet. Die Fügung 28 des Gehäuserings als Sensoreinrichtungs-Befestigungseinrichtung 25 an das vorderseitige Gehäuseteil 22, 20 erfolgt beim Zusammensetzen mit so wenig thermischer Energie in Form von z. B. Lichtwellen, dass einerseits die beiden Teile zusammenschmelzen, ohne dass es zu einer Zerstörung der insbesondere als keramischem Druck-Sensorelement ausgebildeten Sensoreinrichtung 24 oder der direkt angrenzenden Dichtung 27 aus einem Elastomer kommt und andererseits keine elektromagnetischen Felder entstehen, welche eine im Sensor 2 angeschlossene Sensorelektronik 33 zerstören können. Entsprechend sind die zusammenzufügenden Elemente 25, 22 vorzugsweise Metallteile, welche mit insbesondere Lichtwellen als thermischer Energie zusammengeschmolzen werden. Auch der Einsatz anderer Materialien mit entsprechend geeigneten Verfahren zu deren Zusammenschmelzung oder Verbindung mit ggfs. klebenden Materialien ist möglich.

Die derart ausgebildete Befestigung der Sensoreinrichtung 24 an dem Gehäuse 20 oder alternativ auch einer Sensorbefestigungseinrichtung zur Befestigung des Sensors an dem Behältnis 1 ohne weitere dargestellte Komponenten bietet neben dem einfachen Zusammenbau auch räumliche Vorteile mit Blick auf die nutzbare Fläche der Sensoreinrichtung 24. Beispielsweise kann mit dieser Anordnung ein keramisch kapazitiv wirkendes Standard-Druck-Sensorelement mit einem Durchmesser von z. B. 28 mm so befestigt werden, wobei der Kerndurchmesser für ein übliches Gewinde G1 (gemäß DIN ISO 228-1) mit 30,29 mm des Gehäuse-Außengewindes 23 bzw. des Behältnis-Innengewindes 14 in der Behältnis-Durchgangsöffnung 13 vorgesehen werden kann. Für die Sensoreinrichtungs-Befestigungseinrichtung 25 bleibt eine ausreichende Wandstärke von 1 - 1,14 mm zum Umgreifen der Sensoreinrichtung 24. Trotzdem weist die rückseitig der Sensoreinrichtung 24 ausgebildete Wandung des vorderseitigen Gehäuseteils 22 eine ausreichende Stärke auf, um im Bereich des Behältnis-Innengewindes 14 ausreichend Stabilität und Halt für den Sensor 2 zu bieten. Dies wird letztendlich dadurch ermöglicht, dass das Druck-Sensorelement von der Prozessseite aus in die Befestigung bzw. das vorderseitige Gehäuseteil 22, 20 eingebracht und in Außenrichtung von diesem abgestützt wird, wobei das Druck-Sensorelement 24 von dem gefügten Gehäusering als Sensoreinrichtungs-Befestigungseinrichtung 25 mit dem Außendurchmesser von insbesondere 30 mm und der Dichtung 27 gehalten wird.

Bei dem dargestellten Ausführungsbeispiel führt von der Sensoreinrichtung 24 eine Druckausgleichsleitung 30 durch den Innenraum des Gehäuses 20 und weitere Komponenten, insbesondere die Sensorelektronik 33 hindurch um den Luftausgleich zum Drucksensorelement zu gewährleisten, wie dies für sich genommen bekannt ist.

Außerdem führen von der Sensoreinrichtung 24 eine oder mehrere Leitungen als elektrische Anschlüsse 32 zu der Sensorelektronik 33, welche in einem Elektronikgehäuse 34 innerhalb des Gehäuses 20 - 22 aufgenommen ist. Der bzw. die elektrischen Anschlüsse 32 führen dabei auf eine erste Platine 35 und auf dieser zu entsprechenden Leiterbahnen und/oder elektronischen Bauelementen. Die Verbindung zu einer zweiten Platine 36, die beabstandet zu der ersten Platine 35 in dem Elektronikgehäuse 34 aufgenommen ist, erfolgt bei dem dargestellten Ausführungsbeispiel über Verbindungen zwischen der ersten und der zweiten Platine 35, 36 und/oder über das Elektronikgehäuse 34 als solchem.

Die elektrische Verbindung zwischen den beiden Platinen 35 und 36 kann, wie erwähnt, über das Elektronikgehäuse 34 erfolgen. Hierfür werden zweckmäßigerweise auf der Innenwandung des Elektronikgehäuses 34 eine notwendige Anzahl von zueinander isolierten Leiterbahnen aufgebracht. Diese Leiterbahnen, die in der Figur 1 mit dem Bezugszeichen 38 angedeutet sind, können beispielsweise durch randseitig an den Platinen 35 und 36 angeordneten Kontakten, z.B. Schleifkontakten, elektrisch kontaktiert werden. Damit ist eine elektrische Verbindung zwischen der oberen Platine 36 und der unteren Platine 35 sichergestellt. Auf eine separate Steckverbindung kann bei einer solchen Ausführungsform vorteilhafterweise verzichtet werden.

Um eine optimale elektromagnetische Abschirmung der Sensoreinrichtung 24 und der Sensorelektronik 33 zu gewährleisten, ist zwischen die untere Stirnseite des Elektronikgehäuses 34 und einem stufenförmigen Vorsprung am vorderseitigen Gehäuseteil 22 ein lötfähiges Material eingebracht. Da das Sensormodulgehäuse 34 und das Gehäuse 22 aus Metall bestehen, führt ein ausreichend starkes Verpressen beider Teile dazu, dass das lötfähige Material 37 eine verfestigte, elektrisch leitfähige Verbindung zwischen dem Modulgehäuse 34 und dem vorderen Gehäuseteil 22 herstellt. Damit wird eine an sich vorhandene Fuge zwischen dem Modulgehäuse 34 und dem vorderen Gehäuseteil 22 geschlossen.

Das Elektronikgehäuse braucht für eine solche elektrisch leitfähige Pressverbindung nicht unbedingt vollständig aus Metall bestehen. Es genügt, dass das Elektronikgehäuse 34 und das vorderseitige Gehäuseteil 22 zumindest auf der Außenfläche einen lötbaren Werkstoff oder eine lötbare Beschichtung aufweist. Durch Zusammenpressen des Elektronikgehäuses 34 und des vorderseitigen Gehäuseteils 22, ggfs. mit begleitender Erwärmung oder Erhitzung der lötbaren Materialien, werden diese aneinander befestigt, indem überschüssiger lötbarer Werkstoff verdrängt wird. Nach dem Zusammendrücken, insbesondere Zusammenpressen und Erkalten, wird eine elektrisch leitende, feste Verbindung ausgebildet.

Der Innenraum des Gehäuses 20 bzw. das vorderseitige Gehäuseteil 22 oder eine sonstige Befestigungseinrichtung für die Sensoreinrichtung 24 mit dem Gewindeanschluss sind gegen Verschmutzung durch eindringendes Medium von der Behältnis-Innenseite 12 aus durch die Dichtung 27 in der anschweissbaren bzw. angeschweissten Sensoreinrichtungs-Befestigungseinrichtung 25, 26 gegen Verschmutzung geschützt. Dadurch kann auch in den Innenraum des restlichen Gehäuses 20 kein verschmutzendes Medium eindringen, da die umlaufende Dichtung 27 bereits den die Sensoreinrichtungs-Befestigungseinrichtung 25 ausbildenden Gehäusering gegenüber der Sensoreinrichtung 24 abdichtet.

Das dargestellte Ausführungsbeispiel kann in vielerlei Art und Weise modifiziert werden. So ist beispielsweise die Wandung 11 als Wandung zwischen der aus Sicht des Sensors 2 vorderseitigen Behältnis-Innenseite 12 und der Außenseite des Behältnisses 1 ausgebildet. Natürlich ist auch eine umgekehrte Anordnung möglich, bei der die Vorderseite des Sensors 2 mit der Sensoreinrichtung 24 aus einem Behältnis heraus in eine außenseitige offene Umgebung gerichtet ist.

### Bezugszeichenliste:

- 1: Behältnis
- 11: Wandung des Behältnisses
- 12: Behältnis-Innenseite
- 13: Behältnis-Durchgangsöffnung
- 14: Behältnis-Innengewinde
- 15: Behältnis-Nut
- 16: Dichtung (Behältnis / Sensor)
- 2: Sensor
- 20: Gehäuse
- 21: rückseitiges Gehäuseteil
- 22: vorderseitiges Gehäuseteil
- 23: Gehäuse-Befestigungseinrichtung (Außengewinde)
- 24: Sensoreinrichtung / Drucksensorelement
- 25: Sensoreinrichtungs-Befestigungseinrichtung
- 26: nach innen gerichteter Vorsprung
- 27: Dichtung (24 zu 25)
- 28: Fügung
- d_{S}: Durchmesser Sensoreinrichtung 24
- d_{B}: Kerndurchmesser des Innengewindes 14
- 30: Druckausgleichsleitung
- 31: Federgehäuse
- 32: elektrische Anschlüsse
- 33: Sensorelektronik
- 34: Elektronikgehäuse
- 35: erste Platine
- 36: zweite Platine
- 37: Kontakt
- 38: Leiterbahnen

## Patentansprüche

1. Sensor (2) mit
- einem Gehäuse (20) mit Außengewinde (23) zum Befestigen in einem Behältnis
- einer Sensoreinrichtung (24) und
- einer Sensoreinrichtungs-Befestigungseinrichtung (25) zum Befestigen der Sensoreinrichtung (24) am und/oder im vorderseitigen Bereich (22) des Gehäuses (20), wobei
- die Sensoreinrichtungs-Befestigungseinrichtung (25) die Sensoreinrichtung (24) von der Vorderseite aus zumindest in einem Abschnitt des vorderseitigen Randbereichs abstützend umgreift,
**dadurch gekennzeichnet, dass** das Gehäuse (20) und die Sensoreinrichtungs-Befestigungseinrichtung (25) als separate Teile ausgebildet sind, wobei die Sensoreinrichtungs-Befestigungseinrichtung (25) an dem Gehäuse (20, 22) mittels einer Fügung (28) befestigt ist und der Außenumfang der Sensoreinrichtungs-Befestigungseinrichtung (25) kleiner oder gleich dem Kerndurchmesser (d_{B}) des Außengewindes (23) ist.

2. Sensor nach Anspruch 1, bei dem die Fügung (28) eine thermische Schmelzfügung ist.

3. Sensor nach einem vorstehenden Anspruch, bei dem eine Dichtung (27) zwischen der Sensoreinrichtung (24) und der Sensoreinrichtungs-Befestigungseinrichtung (27, 26) einen vorderseitigen Raum vor der Sensoreinrichtung (24) gegenüber dem Innenraum des Gehäuses (20) abdichtet.

4. Verfahren zum Montieren eines Sensors (2) nach einem der Ansprüche 1 bis 3, bei dem
- vorderseitig an einem Gehäuse (20) eine Sensoreinrichtung (24) angesetzt wird,
- die Sensoreinrichtung (24) mittels einer Sensoreinrichtungs-Befestigungseinrichtung (25) umgriffen und gegen die Vorderseite des Gehäuses (20) gedrückt wird, wobei die Sensoreinrichtungs-Befestigungseinrichtung (25) mit zumindest einem vorderseitig nach innen gerichteten Vorsprung (26) und mit zumindest einer längs der Sensoreinrichtung (24) bis zur Vorderseite des Gehäuses (20) reichenden Umfangswandung (25) ausgebildet ist, und
- die Sensoreinrichtungs-Befestigungseinrichtung (25) mit einer festen Fügung (28) an der Vorderseite des Gehäuses (20) befestigt wird.

5. Verfahren nach Anspruch 5, bei dem die Fügung thermisch ausgebildet wird, wobei die Energie ausreichend gering gewählt wird, so dass die sensoreinrichtung (24) aus einem insbesondere keramischen Material thermisch nicht beschädigt wird.

6. Verfahren nach Anspruch 5 oder 6, bei dem die Fügung frei von elektromagnetischen Feldern, welche elektronische Komponenten des Sensors (2) beschädigen können, ausgebildet wird.

## Claims

1. A sensor (2) having
- a housing (20) with an external thread (23) for fastening in a receptacle,
- a sensor device (24) and
- a fastening device (25) for fastening the sensor device (24) to and/or in the front region (22) of the housing (20), wherein
- the fastening device (25) for the sensor device encompasses and provides support for the sensor device (24) from the front at least in one portion of the front edge region,
**characterised in that** the housing (20) and the fastening device (25) for the sensor device are designed as separate parts, with the fastening device (25) for the sensor device being fastened to the housing (20, 22) by means of a joining process (28) and the outer circumference of the fastening device (25) for the sensor device being smaller than or equal to the core diameter (d_{B}) of the external thread (23).

2. A sensor according to Claim 1, in which the joining process (28) is a thermal fusion joining process.

3. A sensor according to a preceding Claim, in which a seal (27) between the sensor device (24) and the fastening device (27, 26) for the sensor device seals a forward area in front of the sensor device (24) from the interior of the housing (20).

4. A method for mounting a sensor (2) according to one of Claims 1 to 3, in which
- a sensor device (24) is affixed to the front of a housing (20),
- the sensor device (24) is encompassed by means of a fastening device (25) for the sensor device and is pressed against the front of the housing (20), the fastening device (25) for the sensor device being designed with at least one projection (26) that is directed inwardly at the front and with at least one circumferential wall (25) that extends along the sensor device (24) up to the front of the housing (20) and,
- the fastening device (25) for the sensor device is fixed by a secure joining process (28) to the front of the housing (20).

5. A method according to Claim 5, in which the joint is thermally designed, with the energy being chosen to be sufficiently small so that the sensor device (24) made from ceramic material, in particular, is not thermally damaged.

6. A method according to Claim 5 or 6, in which the joint is designed to be free of electromagnetic fields which may damage el

## Revendications

1. Capteur (2) comprenant
- un boîtier (20) avec filet mâle (23) pour la fixation dans un récipient,
- un dispositif capteur (24) et
- un dispositif de fixation (25) pour fixer le dispositif capteur (24) sur et/ou dans la zone avant (22) du boîtier (20),
le dispositif de fixation (25) entourant le dispositif capteur (24) depuis la face avant pour le soutenir au moins dans un segment de la zone périphérique avant,
**caractérisé en ce que**
le boîtier (20) et le dispositif de fixation (25) sont des pièces séparées, le dispositif de fixation (25) étant fixé sur le boîtier (20, 22) au moyen d'une jonction (28), et la circonférence extérieure du dispositif de fixation (25) étant inférieure ou égale au diamètre de noyau (d_{B}) du filet mâle (23).

2. Capteur selon la revendication 1,
dans lequel la jonction (28) est une jonction par fusion thermique.

3. Capteur selon l'une des revendications précédentes, dans lequel une garniture d'étanchéité (27) située entre le dispositif capteur (24) et le dispositif de fixation de dispositif capteur (27, 26) rend étanche un espace en avant du dispositif capteur (24) par rapport à l'intérieur du boîtier (20).

4. Procédé de montage d'un capteur (2) selon l'une des revendications 1 à 3,
selon lequel
- on place sur la face avant d'un boîtier (20) un dispositif capteur (24),
- le dispositif capteur (24) est entouré par un dispositif de fixation (25) et poussé contre la face avant du boîtier (20), le dispositif de fixation (25) présentant au moins une portée (26) orientée vers l'intérieur sur la face avant et une paroi périphérique (25) s'étendant le long du dispositif capteur (24) jusqu'à la face avant du boîtier (20), et
- le dispositif de fixation (25) est fixé sur la face avant du boîtier (20) à l'aide d'une jonction (28) inamovible.

5. Procédé selon la revendication 5,
selon lequel
la jonction est réalisée par voie thermique, l'énergie étant choisie suffisamment faible pour ne pas endommager thermiquement le dispositif capteur (24) en particulier en matériau céramique.

6. Procédé selon la revendication 5 ou 6,
selon lequel
la jonction est réalisée sans champs électromagnétiques qui peuvent endommager les composants électroniques du capteur (2).
